# EUROPEAN PATENT SPECIFICATION

(11) **EP 2 897 144 B1**
(45) Date of publication and mention of the grant of the patent: **27.09.2017**
(21) Application number: 15000570.0
(22) Date of filing: 05.12.2008
(51) Int. Cl.: H01G 9/20

(54) **Photosensitized solar cell module and production method thereof**
Lichtsensibilisiertes Solarzellemodul und Herstellungsverfahren dafür
Module cellule solaire photosensibilisé et son procédé de production

(30) Priority: 12.12.2007 JP 2007321070
(43) Date of publication of application: 22.07.2015
(62) Divisional of application: 08858526.0
(73) Proprietor: Sharp Kabushiki Kaisha, Osaka-shi, Osaka 545-8522 (JP)
(72) Inventor: Fukui, Atsushi, Osaka-shi, Osaka, 545-8522 (JP); Fuke, Nobuhiro, Osaka-shi, Osaka, 545-8522 (JP); Yamanaka, Ryohsuke, Osaka-shi, Osaka, 545-8522 (JP); Han, Liyuan, Osaka-shi, Osaka, 545-8522 (JP)
(74) Representative: Müller Hoffmann & Partner

(56) References cited:
- WO-A1-2007/083461
- JP-A- 2001 283 941
- US-A1- 2006 289 056
- FUKE N ET AL: "Back contact dye-sensitized solar cells", JAPANESE JOURNAL OF APPLIED PHYSICS, JAPAN SOCIETY OF APPLIED PHYSICS, JP, vol. 46, no. 18, 1 May 2007 (2007-05-01), pages L420-L422, XP001517819, ISSN: 0021-4922, DOI: DOI:10.1143/JJAP.46.L420
- LIYUAN HAN ET AL: "High Efficiency of Dye-Sensitized Solar Cell and Module", PHOTOVOLTAIC ENERGY CONVERSION, CONFERENCE RECORD OF THE 2006 IEEE 4TH WORLD CONFERENCE ON, IEEE, PI, 1 May 2006 (2006-05-01), pages 179-182, XP031007267, ISBN: 978-1-4244-0016-4

## Description

### TECHNICAL FIELD

The present invention relates to a photosensitized solar cell module including a photosensitized solar cell and a production method thereof. More specifically, the present invention relates to a photosensitized solar cell module with improved characteristics and a reduced weight.

### BACKGROUND ART

A solar cell for converting sunlight into an electric power has been attracting attention as an energy source replacing fossil fuel. Presently, solar cells using a crystalline silicon substrate and thin-film silicon solar cells have been put to practical use. However, the former has a problem that the production cost for the silicon substrate is high, while the latter has a problem that the production cost rises by reason of necessity to use many kinds of gases for semiconductor production and complicated devices. Thus, efforts to reduce the cost per electric power generation output by achieving higher efficiency in photoelectric conversion have been made in either of the solar cells, but the above-mentioned problems have not been solved yet.

A wet solar cell applying photoinduced electron transfer of a metal complex has been proposed as a solar cell of a new type (for example, refer to Patent Document 1).

This wet solar cell has a structure such that a photoelectric conversion layer, to which an absorption spectrum is provided in a visible light range by making a photosensitizing dye adsorbed, and an electrolyte layer are held between electrodes of two glass substrates with the electrodes formed on surfaces thereof. When this wet solar cell is irradiated with light from a transparent electrode side, electrons are generated in the photoelectric conversion layer, the generated electrons move from one electrode to an opposed electrode through an external electric circuit, and the moved electrons are conveyed by ions in the electrolyte to return to the photoelectric conversion layer. An electric energy is taken out by repetition of such electron transfer.

However, the basic structure of the dye-sensitized solar cell described in Patent Document 1 is a structure such that an electrolytic solution is injected between the electrodes of two glass substrates, so that trial manufactured of a small-area solar cell is possible but application to a large-area solar cell such as one having a size of one meter square is difficult. That is to say, when an area of one solar cell is increased, the generated current is increased in proportion to the area but the resistance in an in-plane direction of the transparent electrode is increased and an internal series electric resistance of the solar cell is increased in accordance therewith. As a result, a problem is caused that a fill factor (FF) and a short-circuit current in current-voltage characteristics during the photoelectric conversion are decreased and a photoelectric conversion efficiency is decreased.

Then, in order to solve the above-mentioned problems, there has also been proposed a dye-sensitized solar cell module in which a plurality of the dye-sensitized solar cells are connected in series. In this dye-sensitized solar cell module, an electrode of the solar cell (conductive layer) and an electrode of the adjacent solar cell (counter electrode) are electrically connected (for example, refer to Patent Documents 2 to 4).

In the dye-sensitized solar cells of Patent Documents 1 to 4, a conductive glass (TCO) substrate is used at a light incidence side, and reflection and absorption of light are caused in the glass and the transparent conductive layer, so that there is a problem that the amount of incident light into an electric power generation portion is lost. Then, there has been proposed a dye-sensitized solar cell in which the amount of the incident light into the electric power generation portion is increased by disposing a current collector on an electrolyte layer side of a porous semiconductor layer (for example, refer to Patent Document 5).

Patent Document 1: Japanese Patent No. 2664194
Patent Document 2: Japanese Unexamined Patent Publication No. 11-514787
Patent Document 3: Japanese Unexamined Patent Publication No. 2001-357897
Patent Document 4: Japanese Unexamined Patent Publication No. 2002-367686
Patent Document 5: Japanese Unexamined Patent Publication No. 2003-187883
US 2006/0289056 A1 relates to a dye-sensitized solar cell including a first substrate having a light-transmitting property, a semiconductor electrode containing a sensitizing dye and a range with a first surface thereof facing the first substrate, a first collector electrode arranged on a second surface of the semiconductor electrode, an insulating layer arranged in contact with the first collector electrode, a catalytic electrode layer arranged with a first surface thereof facing the insulating layer, a second substrate arranged on a second surface of the catalytic electrode layer and an electrolyte material incorporated in the semiconductor electrode, the first collector electrode and the insulating layer.

### DISCLOSURE OF THE INVENTION

### PROBLEMS TO BE SOLVED BY THE INVENTION

In the dye-sensitized solar cells of Patent Documents 1 to 4, the dye-sensitized solar cell having a loss of the incident light amount by the glass and the transparent conductive layer as described above as well as tempered glass 7 as shown in Fig. 7 for strength maintenance is used in the case of placing the dye-sensitized solar cell on a roof of an ordinary house for outdoor placement (for a domestic power source).

This dye-sensitized solar cell has a structure such that a porous semiconductor layer 16 with the sensitizing dye adsorbed, a porous insulating layer 14, a catalyst layer 13, a conductive layer 15 and a cover member 19 are laminated in this order on a glass substrate 11 interposing a transparent conductive layer 12, an outer circumference of the laminate is sealed with a sealing member, the inside of the laminate is filled with an electrolyte, and tempered glass 17 is stuck on a light-receiving surface side of the glass substrate 11.

In the production of this dye-sensitized solar cell, the porous semiconductor layer 16 and the porous insulating layer 14 are formed by applying a temperature equal to or higher than the heat-resistant temperature (300°C to 400°C) of the tempered glass 17, so that the layers can not be directly formed on the tempered glass 17 and the glass substrate 11 with a high heat-resistant temperature can not be omitted. Thus, there is a problem that not only the incident light loss due to two glass plates of the tempered glass 17 and the glass substrate 11 is caused but also the total weight of the solar cell becomes heavy.

In addition, in the case of forming the catalyst layer 13 by screen printing, particle diameters of a particulate material of the porous insulating layer 14 and a particulate material of the catalyst layer 13 need to be adjusted for preventing the particulate material of the catalyst layer 13 from penetrating into the porous insulating layer 14 to attach to the porous semiconductor layer 16.

The dye-sensitized solar cell of Patent Document 5 has the above-mentioned problem that the tempered glass needs to be placed on the transparent substrate in the case of placing the solar cell outdoors for the reason that the porous semiconductor layer is laminated on the transparent substrate, and the production process becomes complicated for the reason that the porous semiconductor layer side and the catalyst layer side are formed on separate substrates and stuck together for the production.

The light transmittance of the conductive glass (TCO) substrate used in Patent Documents 1 to 4 at the light incidence side is on a longer-wavelength side than 300 nm and therefore, in the case of using a photosensitization element (quantum dot) of an inorganic material, there is a problem that the light transmittance is small at a light absorption wavelength of the quantum dot of 250 nm to 300 nm so that a photosensitizative action of the inorganic material is not effectively utilized.

The present invention has been made in view of the above-mentioned problems, and is intended to provide a photosensitized solar cell module, which is capable of being placed outdoors, reduced in the weight and improved in characteristics, and can be produced easily, and a production method thereof.
This object is solved by the subject-matter of the independent claims. Further advantageous embodiments and refinements of the present invention are described in respective sub-claims.

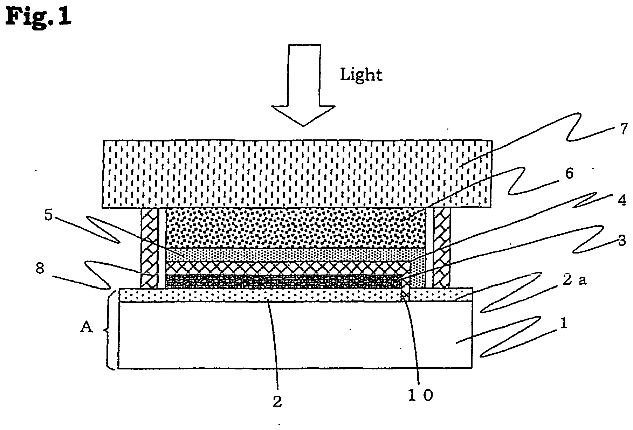

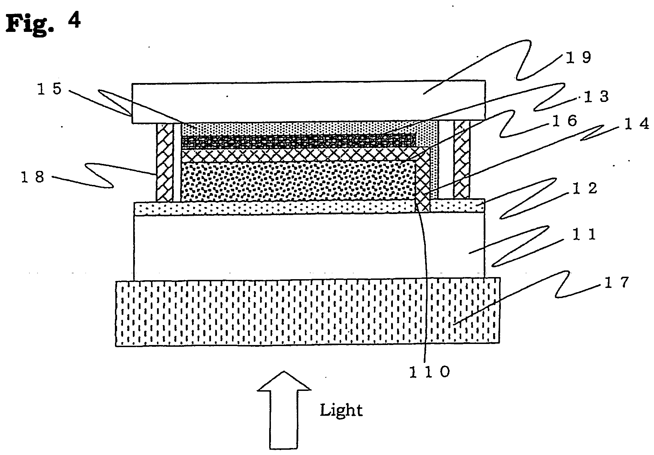

The present invention produces the following effects.
(1) A transparent conductive film does not exist on the light-receiving surface side of the porous semiconductor layer as an electric generating element, so that no light incidence loss due to the transparent conductive film is caused and the short-circuit current is increased to improve the conversion efficiency. In particular, in the case of using a photosensitization element (quantum dot) of an inorganic material containing at least one of Cd, Pb, Sb, In, Ga, S, Se and As, the light absorption wavelength of the quantum dot is from 250 nm to 300 nm, so that the short-circuit current is largely improved as compared with the case of using the conductive glass (TCO) substrate for transmitting the light on the longer-wavelength side than 300 nm.
(2) The element is formed on the substrate at a non-light-receiving surface side in the structure of the present invention, so that various materials may be used for the translucent cover member at the light-receiving surface side. Therefore, in the case of placing the photosensitized solar cell module on a roof of an ordinary house for outdoor placement (for a domestic power source), tempered glass may be used as the translucent cover member. Accordingly, unlike as shown in the conventional structure (refer to Fig. 7), tempered glass does not need to be separately placed on the light-receiving surface side of the substrate for forming the element, so that no light incidence loss due to two glass substrates is caused and the short-circuit current is more increased to allow a reduction in the weight and a reduction in costs for the photosensitized solar cell (or the module thereof).
(3) In the conventional structure (refer to Fig. 7), the catalyst layer is formed on the porous insulating layer, so that measures to prevent the catalyst material from attaching to the porous semiconductor layer need to be performed; however, the catalyst material is directly formed on the conductive substrate in the structure of the present invention (refer to Figs. 1 and 4), so that any catalyst material may be used as long as it binds to the conductive substrate.
(4) A substrate obtained by forming a metal film exhibiting no corrosiveness to an electrolytic solution, such as one made of titanium, nickel or tantalum on an inexpensive insulative substrate (such as a ceramic substrate) may be used as the conductive substrate instead of expensive FTO glass with a transparent conductive film formed on a glass substrate, so that a further reduction in costs for the photosensitized solar cell (or the module thereof) may be intended.

### BRIEF DESCRIPTION OF THE DRAWINGS

Fig. 1 is a schematic cross-sectional view showing a photosensitized solar cell useful for understanding the invention.
Fig. 2 is a schematic cross-sectional view showing a solar cell module in which a plurality of the solar cells of Fig. 1 are electrically connected in series.
Fig. 3 is a schematic cross-sectional view showing a connecting portion of two solar cells in the solar cell module of Fig. 2.
Fig. 4 is a schematic ross-sectional view showing a conventional photosensitized solar cell.
Fig. 5 is a schematic cross-sectional view showing a solar cell module in which a plurality of conventional solar cells are electrically connected in series.
Fig 6 is a schematic cross-sectional view showing a connecting portion of two solar cells in the solar cell module of Fig. 5.

### DESCRIPTION OF THE REFERENCE NUMERALS

- 1: substrate
- 2: first conductive layer
- 2a: extraction electrode
- 3: catalyst layer
- 4: porous insulating layer
- 5: second conductive layer
- 6: porous semiconductor layer
- 7: translucent cover member (tempered glass)
- 8: sealing member (intercell insulating layer)
- A: conductive substrate

### BEST MODE FOR CARRYING OUT THE INVENTION

The photosensitized solar cell module of the present invention characterized in that at least a catalyst layer, a porous insulating layer internally containing an electrolyte, a porous semiconductor layer with a photosensitizer adsorbed thereon, internally containing the electrolyte, and a translucent cover member are laminated in this order on a conductive substrate.

That is to say, this photosensitized solar cell is mainly characterized by containing no transparent conductive layer on the light-receiving surface side of the porous semiconductor layer.

In the present invention, a conductive layer for allowing movement of the electrolyte between the porous insulating layer and the porous semiconductor layer is provided
between the porous insulating layer and the porous semiconductor layer.

In the photosensitized solar cell module having the conductive layer between the porous insulating layer and the porous semiconductor layer, this conductive layer serves as a negative electrode and the conductive substrate serves as a positive electrode. In a case where the conductive layer is a dense film, the movement of the electrolyte and an electron during electric power generation between the porous insulating layer and the porous semiconductor layer becomes difficult, and therefore plural small pores are preferably formed in the conductive layer so that the electrolyte and the electron may move between the porous insulating layer and the porous semiconductor layed

Embodiments of the above-mentiond type of photosensitized solar cell module using photosensitized solar cells are hereinafter described with reference to the drawings. The following embodiments are examples and various embodiments may be performed within the subject-matter defined by the claims.

### Example useful for understanding the invention

Fig. 1 is a schematic cross-sectional view showing photosensitized solar cells as used in photosensitized solar cell modules of the present invention. This photosensitized solar cell (occasionally abbreviated as the solar cell hereinafter) is of a type having a conductive layer 5 between a porous insulating layer 4 and a porous semiconductor layer 6.

More specifically, this solar cell is provided with a conductive substrate A in which a conductive layer 2 (hereinafter referred to as the first conductive layer 2) is formed on a substrate 1, and a catalyst layer 3, the porous insulating layer 4, the conductive layer 5 (hereinafter referred to as the second conductive layer 5), the porous semiconductor layer 6 with a photosensitizer adsorbed thereon and a translucent cover member 7, which are sequentially formed on the first conductive layer 2, and the porous insulating layer 4 and the porous semiconductor layer 6 contain an electrolyte. A sealing member 8 is provided on the outer circumference between the conductive substrate A and the translucent cover member 7.

The first conductive layer 2 has a scribe line 10 with a part thereof removed in an inside region in proximity of the sealing member 8. Accordingly, the first conductive layer 2 is divided into a wide portion as a region for forming a solar cell and a narrow portion while interposing the scribe line 10 therebetween. This wide portion externally exposed in the first conductive layer and the narrow portion externally exposed in the first conductive layer are electrically connected to an external circuit.

The porous insulating layer 4 is formed from above the catalyst layer 3 over a scribe line bottom face (surface of the substrate 1). In addition, the second conductive layer 5 is formed from above the porous insulating layer 4 over the narrow first conductive layer. The narrow first conductive layer electrically connected to the second conductive layer 5 is regarded as an extraction electrode 2 of the second conductive layer 5.

Each component of the solar cells shown in Figs. 1 to 6 is not necessarily shown by an absolute or relative scale factor.

In this solar cell, a surface of the translucent cover member 7 serves as the light-receiving surface, the second conductive layer 5 serves as the negative electrode and the first conductive layer 2 serves as the positive electrode. When the light-receiving surface of the translucent cover member 7 is irradiated with light, electrons are generated in the porous semiconductor layer 6, the generated electrons move from the porous semiconductor layer 6 to the second conductive layer 5, and the electrons move from an extraction electrode 2a to the first conductive layer 2 through the external circuit and are conveyed by the ions in the electrolyte in the porous insulating layer 4 through the catalyst layer 3 to move to the second conductive layer 5.

This solar cell may be produced by a method for producing a photosensitized solar cell including step (1) of laminating the catalyst layer 3, the porous insulating layer 4, the second conductive layer 5 and the porous semiconductor layer 6 with the photosensitizer adsorbed thereon on the conductive substrate in this order, step (2) of covering a surface of the porous semiconductor layer 6 with the translucent cover member 7 and sealing an outer circumference between the conductive substrate and the translucent cover member 7 with the sealing member 8, and step (3) of injecting the electrolyte into an inside region between the conductive substrate and the translucent cover member 7 to impregnate the electrolyte into the porous semiconductor layer 6 and the porous insulating layer 4. In a case where the second conductive layer 5 is a dense film, plural small pores are formed in the second conductive layer 5 on the porous insulating layer 4 before forming the porous semiconductor layer 6 in step (1).

Next, each component in this solar cell is described.

### (Substrate)

The substrate 1 is not particularly limited as long as it may support the solar cell; examples thereof include substrates made of glass such as soda-lime float glass, quartz glass or borosilicate glass, and ceramics.

The thickness of the substrate 1 is not particularly limited, but appropriately about 0.5 to 8 mm.

### (First conductive layer)

The first conductive layer 2 is not particularly limited as long as it has electrical conductivity, and may or may not have translucency.

Examples of the material composing the translucent first conductive layer 2 include an indium-tin complex oxide (ITO), tin oxide (SnO2), fluorine-doped tin oxide (FTO) and zinc oxide (ZnO).

The translucent first conductive layer 2 may be formed on the substrate 1 by a known method such as a sputtering method or a spray method, and it is also possible to use a commercial product of the conductive substrate in which FTO as the transparent conductive layer is laminated on the soda-lime float glass as the substrate 1.

In addition, the first conductive layer 2 may be a metal film exhibiting no corrosiveness to an electrolytic solution, such as one made of titanium, nickel or tantalum, and may be formed on the substrate 1 by a known method such as a sputtering method or an evaporation method.

The film thickness of this first conductive layer 2 is appropriately about 0.02 to 5 µm. The lower the film resistance thereof is, the better it is, and the film resistance is particularly preferably 40 Ω/sq or less.

### (Catalyst layer)

The material composing the catalyst layer 3 is not particularly limited as long as it is generally used for the photoelectric conversion material in this field. Examples of this material include platinum, carbon black, ketjen black, a carbon nanotube and fullerene.

For example, in the case of using platinum, the catalyst layer 3 may be formed on the first conductive layer 2 by known methods such as a sputtering method, pyrolysis of platinic chloride and electrodeposition. The film thickness thereof is appropriately about 0.5 nm to 1000 nm, for example.

In the case of using carbon such as carbon black, ketjen black, a carbon nanotube or fullerene, carbon dispersed in a solvent in a paste form may be applied to the first conductive layer 2 by a screen printing method or the like to form the catalyst layer 3.

The form of the catalyst layer 3 is not particularly limited and the catalyst layer 3 may be made into a dense filmy form, a porous filmy form or a cluster form.

### (Porous insulating layer)

The porous insulating layer is necessary for the non-light-receiving surface side in the case of forming the photosensitized solar cell of each type. The porous insulating layer 4 is a layer having a function of electrically insulating the porous semiconductor layer 6 and the catalyst layer 3, and is formed on the catalyst layer 3 at the non-light-receiving surface side of the porous semiconductor layer 6.

Examples of the material composing the porous insulating layer 4 include niobium oxide, zirconium oxide, silicon oxide (silica glass or soda glass), aluminum oxide and barium titanate; one kind or two or more kinds of these materials may be selectively used. Titanium oxide and rutile-type titanium oxide with a particle diameter of 100 nm to 500 nm may be used. These materials are preferably particulate and an average particle diameter thereof is 5 to 500 nm, preferably 10 to 300 nm.

### (Method of forming porous insulating layer)

The porous insulating layer 4 may be formed in the same manner as for the porous semiconductor layer 6 to be described later. That is to say, fine particulates for forming the porous insulating layer 4 are dispersed in an appropriate solvent, and a polymeric compound such as ethyl cellulose or polyethylene glycol (PEG) is further mixed thereto to obtain a paste. The paste is applied to the porous semiconductor layer, dried and fired to thereby obtain the porous insulating layer.

### (Second conductive layer)

The second conductive layer 5 is disposed between the porous semiconductor layer 6 and the porous insulating layer 4 in a case where the electric resistance value of the porous semiconductor layer 6 is large.

Examples of the material composing the second conductive layer 5 include an indium-tin complex oxide (ITO), tin oxide (SnO₂), fluorine-doped tin oxide (FTO), zinc oxide (ZnO), titanium, nickel and tantalum.

The second conductive layer 5 may be formed on the porous insulating layer 4 by a known method such as a sputtering method, a spray method or an evaporation method. The film thickness of the second conductive layer 5 is appropriately about 0.02 to 5 µm, and the lower the film resistance thereof, the better it is, and the film resistance is particularly preferably 40 Ω/sq or less.

In a case where the second conductive layer 5 has a dense structure, plural small pores for allowing the electrolyte to move between the porous insulating layer 4 and the porous semiconductor layer 6 (path of the electrolytic solution) are preferably formed in the second conductive layer 5. These small pores may be formed by physical contact or laser processing. The size of the small pores is preferably about 0.1 µm to 100 µm, more preferably about 1 µm to 50 µm. The interval between the small pores is preferably about 1 µm to 200 µm, more preferably about 10 µm to 300 µm.

The more dense the second conductive layer 5 is (the smaller the porosity is), the more monotonously the fill factor and the performance of the solar cell are deteriorated, so that the small pores may be formed in a case where the desired performance is not obtained.

### (Porous semiconductor layer)

The material composing the porous semiconductor layer 6 is not particularly limited as long as it is generally used for the photoelectric conversion material in this field. Examples of this material include semiconductor compounds such as titanium oxide, zinc oxide, tin oxide, iron oxide, niobium oxide, ceric oxide, tungstic oxide, barium titanate, strontium titanate, cadmium sulfide, lead sulfide, zinc sulfide, indium phosphide, copper-indium sulfide (CuInS₂), CuAlO₂ and SrCu₂O₂ and combinations thereof. Among these, titanium oxide is particularly preferable in view of stability and safety.

Examples of titanium oxide for the material for forming the porous semiconductor layer 6 include various kinds of titanium oxide in a narrow sense such as anatase-type titanium oxide, rutile-type titanium oxide, amorphous titanium oxide, metatitanic acid and orthotitanic acid, titanium hydroxide and hydrous titanium oxide and these compounds may be used singly or in the form of a mixture. Crystalline titanium oxide of two kinds of the anatase type and the rutile type may be in either form depending on the production method and the thermal history thereof, and vet the anatase type is common. With regard to the photosensitization, crystalline titanium oxide with a high content of the anatase type, such as 80% or more, is particularly preferable.

The form of the porous semiconductor layer 6 may be either a single crystal or a polycrystal; yet, the polycrystal is preferable in view of stability, difficulty of crystal growth and production costs, and the form of polycrystalline fine particles finely powdered (from a nano to a microscale) is particularly preferable.

Particles with particle sizes of two or more kinds composed of same or different semiconductor compounds may be used in the form of a mixture as the material particles for forming the porous semiconductor layer 6. It is conceived that particles with a large particle size scatter incident light to contribute to an improvement in the light capture rate, while particles with a small particle size increase adsorption sites to contribute to an improvement in the adsorption amount of a dye.

The ratio of average particle diameters of different particle sizes is preferably ten times or more; the average particle diameter of the particles with a large particle size is appropriately about 100 to 500 nm, while the average particle diameter of the particles with a small particle size is appropriately about 5 nm to 50 nm. In the case of mixed particles composed of different semiconductor compounds, it is effective to use a semiconductor compound exhibiting a strong adsorption function as the particles with a small particle size.

The most preferable titanium oxide semiconductor fine particles may be produced by known methods described in various kinds of documents, such as a gas phase method and a liquid phase method (a hydrothermal synthesis method or a sulfuric acid method). Examples of the methods include a method of obtaining a chloride developed by Degussa AG through high-temperature hydrolysis.

### (Method of forming porous semiconductor layer)

The method of forming the porous semiconductor layer 6 on the second conductive layer 5 is not particularly limited and examples thereof include known methods. Specific examples thereof include a method of applying a suspension containing semiconductor particles to the second conductive layer 5 and performing at least one of drying and firing.

In this method, the semiconductor fine particles are first suspended in an appropriate solvent to obtain a suspension. Examples of this solvent include glyme-based solvents such as ethylene glycol monomethyl ether, alcohols such as isopropyl alcohol, alcohol-based mixed solvents such as isopropyl alcohol/toluene, and water. A commercial titanium oxide paste (such as Ti-nanoxide D, T/SP, or D/SP, manufactured by Solaronix SA) may be used instead of this suspension.

Subsequently, the obtained suspension is applied to the second conductive layer 5 by a known method such as a doctor blade method, a squeegee method, a spin coat method or a screen printing method and performing at least one of drying and firing to form the porous semiconductor layer 6.

The temperature, time and atmosphere necessary for drying and firing may be properly determined in accordance with the kinds of the material for forming the second conductive layer 5 and the semiconductor particles for forming the porous semiconductor layer 6; for example, under an air atmosphere or an inert gas atmosphere, at a temperature in a range of about 50 to 800°C, and for a time of about 10 seconds to 12 hours. The drying and firing may be performed once at a single temperature, or twice or more at different temperatures.

The porous semiconductor layer 6 may be composed of plural layers, in which case a step in which suspensions of different semiconductor particles are prepared and applied, and subjected to at least one of drying and firing may be repeated twice or more.

The film thickness of the porous semiconductor layer 6 is not particularly limited, but is appropriately about 0.1 to 100 µm, for example. The porous semiconductor layer 6 is preferably large in the surface area, which is preferably about 10 to 200 m²/g, for example.

After forming the porous semiconductor layer 6, for the purpose of improvement in the electrical connection between the semiconductor fine particles, an increase in the surface area of the porous semiconductor layer 6, and a decrease in the defect level on the semiconductor fine particles, the porous semiconductor layer 6 may be treated with an aqueous titanium tetrachloride solution in the case where the layer 6 is a titanium oxide film, for example.

### (Photosensitizer)

Examples of the photosensitizer adsorbed on the porous semiconductor layer 6 include sensitizing dyes such as various kinds of organic dyes having absorption in a visible light range and an infrared ray range, and metal complex dyes, and inorganic materials composing the photosensitization element to be described later (occasionally referred to as a quantum dot hereinafter); these may be used singly or two or more kinds of them may be used selectively together.

### <Organic dye>

Examples of the organic dyes include an azo dyes, a quinone dyes, a quinoneimine dyes, a quinacridone dyes, a squarylium dyes, a cyanine dyes, a merocyanine dyes, a triphenylmethane dyes, a xanthene dyes, a porphyrin dyes, a perylene dyes, an indigo dyes, and a naphthalocyanine dyes. An absorbance coefficient of an organic dye is generally high as compared with that of a metal complex dye having morphology of coordination bond of a molecule to a transition metal.

### <Metal complex dye>

Examples of the metal complex dyes include those having morphology of coordination bond of molecules to metals such as Cu, Ni, Fe, Co, V, Sn, Si, Ti, Ge, Cr, Zn, Ru, Mg, Al, Pb, Mn, In, Mo, Y, Zr, Nb, Sb, La, W, Pt, TA, Ir, Pd, Os, Ga, Tb, Eu, Rb, Bi, Se, As, Sc, Ag, Cd, Hf, Re, Au, Ac, Tc, Te or Rh; among these, a phthalocyanine type dyes and a ruthenium type dyes are preferable, and a ruthenium type metal complex dyes are particularly preferable.

In particular, the ruthenium type metal complex dyes represented by the following formulae (1) to (3) are particularly preferable, and examples of the commercial ruthenium type metal complex dye include trade names Ruthenium 535 dye, Ruthenium 535-bisTBA dye and Ruthenium 620-1 H3TBA dye manufactured by Solaronix SA.

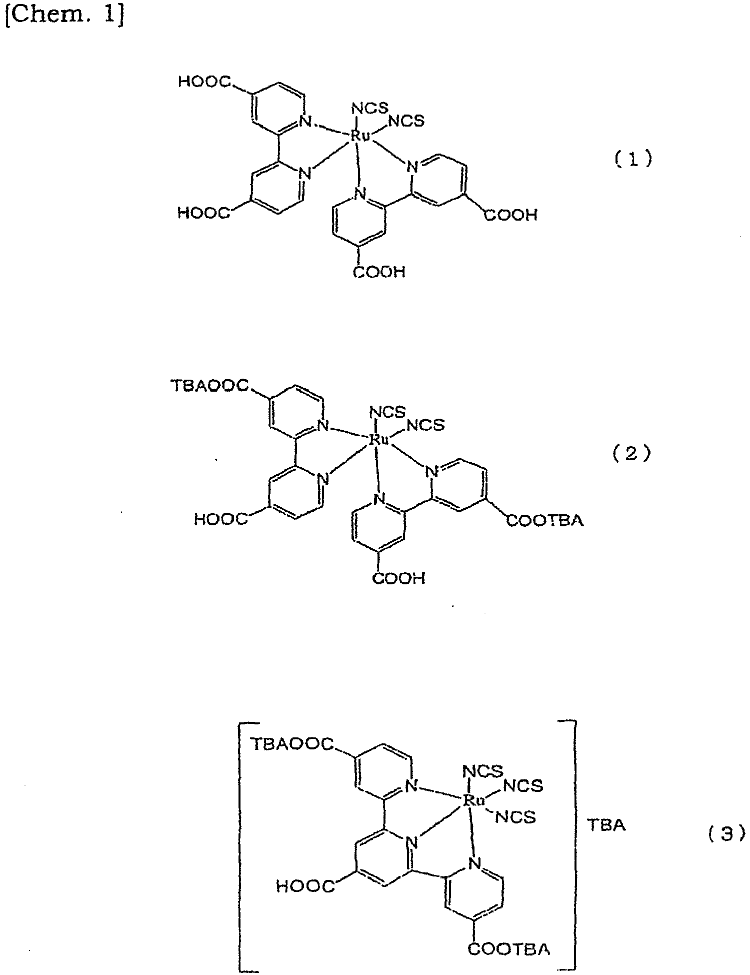

Further, in order to firmly adsorb a dye on the porous semiconductor layer 6, the dye is preferable to have an interlock groups such as a carboxyl group, an alkoxy group, a hydroxyl group, a sulfonic acid group, an ester group, a mercapto group and a phosphonyl group, and the like. Generally, the interlock groups intervene in fixing the dye in the porous semiconductor layer 6 and provide an electrical connection for facilitating the movement of the electron between the dye in an excited state and a conduction band of the semiconductor.

### (Dye adsorption method)

Typical examples of a method of adsorbing the dye on the porous semiconductor layer 6 include a method of immersing a laminate, in which the catalyst layer 3, the porous insulating layer 4, the second conductive layer 5 and the porous semiconductor layer 6 are formed on the conductive substrate, in a solution with the dye dissolved therein (dye adsorption solution). On this occasion, the dye adsorption solution may be heated so as to be penetrated into a micropore bottom in the porous semiconductor layer 6.

The solvent for dissolving the dye may be one which dissolves the dye, and specific examples thereof include an alcohol, toluene, acetonitrile, tetrahydrofuran (THF), chloroform and dimethylformamide. Ordinarily, these solvents are preferably purified and two or more kinds thereof may be used in the form of a mixture. The dye concentration in the dye adsorption solution may be properly determined in accordance with conditions such as the dye to be used, the kind of the solvent, and the dye adsorption step; for example, preferably 1 × 10⁻⁵ mol/L or more. The dye adsorption solution may be prepared with heating for improving the solubility of the dye.

### (Method of adsorbing photosensitizing dye)

Typical examples of a method of adsorbing the dye on the porous semiconductor layer 6 include a method of immersing a laminate, in which the catalyst layer 3, the porous insulating layer 4, the second conductive layer 5 and the porous semiconductor layer 6 are formed on the conductive substrate, in a solution with the dye dissolved therein (dye adsorption solution). On this occasion, the dye adsorption solution may be heated for being penetrated into a micropore bottom in the porous semiconductor layer 6.

The solvent for dissolving the dye may be one which dissolves the dye, and specific examples thereof include an alcohol, toluene, acetonitrile, tetrahydrofuran (THF), chloroform and dimethylformamide. Ordinarily, these solvents are preferably purified and two or more kinds thereof may be used in the form of a mixture. The dye concentration in the dye adsorption solution may be properly determined in accordance with conditions such as the dye to be used, the kind of the solvent, and the dye adsorption step; for example, preferably 1 × 10⁻⁵ mol/L or more. The dye adsorption solution may be prepared with heating for improving the solubility of the dye.

### <Inorganic material composing photosensitization element (quantum dot)>

The quantum dot made of the inorganic material composing the photosensitization element is not particularly limited as long as it is generally used for the photoelectric conversion material in this field. Such a material contain at least one of Cd, Pb, Sb, In, Ga, S, Se and As.

Specific examples thereof include CdSe, PbSe, SbSe, CdS, PbS, Sb₂S₃, InAs and InGaAs.

The quantum dot may be produced by known methods described in various kinds of documents. For example, CdS may be produced by the methods described in J. Phys. Chem. 1994, 98, 3183 and J. Phys. Chem. 2003, 107, 14154, CdSe may be produced by the method described in J. Phys. Chem. B 103, 1999 3065, PbSe and PbS may be produced by the methods described in J. Phys. Chem. B 2002, 106, 10634 and J. Am. Chem. Soc. 2004, 126, 11752, Sb₂S₃ may be produced by the method described in Japanese Unexamined Patent Publication No. 2007-273984, and InAs may be produced by the method described in J. Phys. Chem. B 110, 2006 25453.

When the size of the quantum dot is small, a band gap is enlarged and the wavelength of absorbable light is only on a short wavelength side, and when the size of the quantum dot is too large, the level in the quantum dot is not dispersed and a quantum effect is not developed. Therefore, the size of the quantum dot is preferably 0.5 nm to 5 nm.

### (Method of adsorbing quantum dot)

In order to make the porous semiconductor layer 6 support the quantum dot as a light absorber, an interlock group may be bonded to the quantum dot. The interlock group serves to bond the quantum dot and the porous semiconductor, and preferably has two carboxyl groups, alkoxy groups, hydroxyl groups, sulfonic acid groups, ester groups, mercapto groups or phosphonyl groups. Generally, the interlock group intervenes in fixing the light absorber in the porous semiconductor layer 6 and provides an electrical connection for facilitating the movement of the electron between the quantum dot in an excited state and a conduction band of the semiconductor.

Specifically, dicarboxylic acids such as malonic acid, malic acid and maleic acid, or mercaptoacetic acid having carboxylic acid and a mercapto group are preferable.

Typical examples of a method of making the porous semiconductor layer 6 support (adsorb) the quantum dot include a method of immersing the porous semiconductor layer in a solution with the quantum dot dispersed therein. On this occasion, the dispersion solution of the quantum dot may be heated so as to be penetrated into a micropore bottom in the porous semiconductor layer 6.

Specific examples of the solvent for dispersing the quantum dot include an alcohol, toluene, acetonitrile, tetrahydrofuran (THF), chloroform and dimethylformamide. Ordinarily, these solvents are preferably purified and two or more kinds thereof may be used in the form of a mixture. The concentration of the quantum dot in the solution may be properly determined in accordance with conditions such as the quantum dot to be used, the kind of the solvent, and the quantum dot support step; for example, preferably 1 × 10⁻⁵ mol/L or more. The dye adsorption solution may be prepared with heating for improving the solubility of the dye.

As in the method described in Japanese Unexamined Patent Publication No. 2007-273984, the quantum dot may be directly formed on the porous semiconductor layer.

### (Electrolyte)

The electrolyte is a liquid containing a redox molecule and is not particularly limited as long as it is an electrolyte generally used for a cell or a solar cell.

Examples of the redox molecules include I⁻/I³⁻ type, Br²⁻/Br³ type, Fe²⁺/Fe³⁺ type and quinone/hydroquinone type molecules. Specific examples thereof may include a combination of iodine (I₂) with a metallic iodide, such as lithium iodide (LiI), sodium iodide (Nal), potassium iodide (KI) and calcium iodide (Cal₂), a combination of iodine with a tetraalkylammonium salt, such as tetraethylammonium iodide (TEAI), tetrapropylammonium iodide (TPAI), tetrabutylammonium iodide (TBAI) and tetrahexylammonium iodide (THAI), and a combination of bromine with a metallic bromide, such as lithium bromide (LiBr), sodium bromide (NaBr), potassium bromide (KBr) and calcium bromide (CaBr₂); among these, the combination of LiI and I₂ is particularly preferable.

Examples of the solvent for the electrolyte include carbonate compounds such as propylene carbonate, nitrile compounds such as acetonitrile, alcohols such as ethanol, water and aprotic polar substances. Among these, the carbonate compound and the nitrile compound are particularly preferable. These solvents may be used in the form of a mixture of two or more kinds.

An additive may be added to the electrolyte as required.

Examples of the additive include nitrogen-containing aromatic compounds such as tert-butylpyridine (TBP), and imidazole salts such as dimethylpropyl imidazole iodide (DMPII), methylpropyl imidazole iodide (MPII), ethylmethyl imidazole iodide (EMII), ethyl imidazole iodide (EII) and hexylmethyl imidazole iodide (HMII).

The electrolyte (redox molecules) concentration in the electrolyte is preferably in a range of 0.001 to 1.5 mol/L, particularly preferably in a range of 0.01 to 0.7 mol/L.

### (Translucent cover member)

The translucent cover member 7 may be one which has translucency and is capable of covering at least the light-receiving surface side of the porous semiconductor layer 6; for example, tempered glass, a glass plate except tempered glass, and a transparent plastic sheet may be used therefor, and tempered glass is preferable in the case of placing the solar cell outdoors. In the case of using a transparent plastic sheet, two plastic sheets are disposed on the non-light-receiving surface side of the substrate 1 and the light-receiving surface side of the porous semiconductor layer 6, and the outer circumference thereof is heat-sealed to allow the whole solar cell to be sealed, and thereby the sealing member to be described later may be omitted.

### (Sealing member)

As described above, in the case of using tempered glass or another glass plate as the translucent cover member, the sealing member 8 is preferably placed. The sealing member 8 has a function of preventing leakage of the electrolytic solution inside the solar cell, a function of absorbing a falling object and stress (impact) against a support such as the substrate 1 or tempered glass, and a function of absorbing flexure on the support during long-term use.

In addition, in the case of producing a solar cell module by connecting at least two solar cells of the present invention in series, the sealing member 8 is so important as to function as an intercell insulating layer for preventing the electrolytic solution from moving between the solar cells.

The material composing the sealing member 8 is not particularly limited as long as it is generally usable for the solar cell and is a material capable of performing the above-mentioned functions. Examples of this material include an ultraviolet curable resin and a thermosetting resin; specific examples thereof include a silicone resin, an epoxy resin, a polyisobutylene resin, a hot-melt resin and a glass frit, and two or more kinds thereof may be laminated into two or more layers to form the sealing member 8.

As the ultraviolet curable resin, it is possible to adopt model number: 31X-101 manufactured by Three Bond Co., Ltd., and as the thermosetting resin, it is possible to adopt model number: 31X-088 manufactured by Three Bond Co., Ltd. and generally commercialized epoxy resins.

The pattern of the sealing member 8 may be formed by using a dispenser in the case of using a silicone resin, an epoxy resin or a glass frit, and may be formed by opening a patterned hole in a sheet-like hot-melt resin in the case of using a hot-melt resin.

### Embodiment

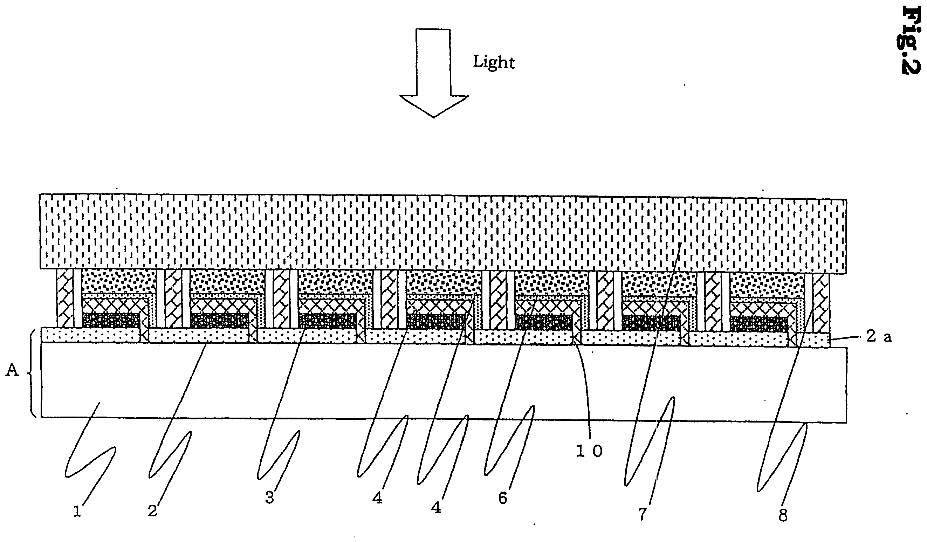

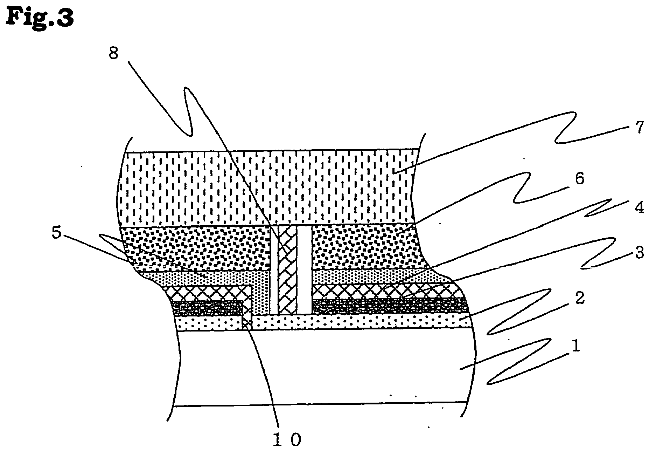

Fig. 2 is a schematic cross-sectional view showing a solar cell module in which a plurality of the solar cells of Fig. 1 are electrically connected in series, and Fig. 3 is a schematic cross-sectional view showing a connecting portion of two solar cells in the solar cell module of Fig. 2. In Figs. 2 and 3, the same reference numerals are given for the same components as the components in Fig. 1.

In producing this solar cell module, the conductive layer formed on the substrate 1 is first patterned at predetermined intervals by a laser scribe method to form a plurality of scribe lines with the conductive layer removed. Thus, the plural first conductive layers 2 electrically separated from one another are formed to offer a solar cell forming region on each of the first conductive layers 2.

Among the plural first conductive layers 2, the first conductive layer 2 at one end in a direction orthogonal to the scribe line is formed into a narrow width, on which first conductive layer 2 with the narrow width the solar cell is not formed, and this first conductive layer 2 is utilized as the extraction electrode 2a of the second electrode layer 5 of the adjacent solar cell.

Next, the catalyst layer 3 is formed in proximity of the scribe line on each of the first conductive layers 2, the porous insulating layer 4 is formed from above the catalyst layer 3 over the scribe line bottom face (surface of the substrate 1), the second conductive layer 5 is formed from above the porous insulating layer 4 over the adjacent first conductive layer 2, plural small pores are formed on the second conductive layer 5 in a case where the second conductive layer 5 is a dense film, and the porous semiconductor layer 6 is formed on the second conductive layer 5.

Next, the photosensitizer is adsorbed in the porous semiconductor layer 6 in conformance with the above description.

Subsequently, the sealing material is applied between the outer circumference of the first electrode layer 2 and the adjacent solar cell forming region in the first electrode layer 2, and the translucent cover member 7 (such as tempered glass) is mounted on the sealing material and the porous semiconductor layer 6 to form the sealing member (intercell insulating layer) 8 by curing the sealing material.

Thereafter, the electrolytic solution is injected inside through an injection hole formed previously on the substrate 1 to penetrate into the porous insulating layer 4 and the porous semiconductor layer 6, and the injection hole is sealed with a resin, whereby the photosensitized solar cell module is completed, in which plural photosensitized solar cells are electrically connected in series.

Selection of forming methods and materials of each layer composing this solar cell module may be performed in conformance with the above description.

In this solar cell module of the Embodiment, a surface of the translucent cover member 7 serves as the light-receiving surface, the second conductive layer 5 serves as the negative electrode and the first conductive layer 2 serves as the positive electrode. When the light-receiving surface of the translucent cover member 7 is irradiated with light, electrons are generated in each of the porous semiconductor layers 6, the generated electrons move from each of the porous semiconductor layers 6 to each of the second conductive layers 5 and moves from each of the second conductive layers 5 to each of the first conductive layers 2 of the adjacent solar cell, and the moved electrons are conveyed by the ions in the electrolyte in each of the porous insulating layers 4 through each of the catalyst layers 3 to move to each of the second conductive layers 5. In Fig. 2, the first conductive layer 2 of the left solar cell and the extraction electrode 2a of the right solar cell in the series connection direction are electrically connected to the external circuit, so that electricity is taken out to the outside.

### EXAMPLES

The present invention is described more specifically by examples and comparative examples, but is not limited thereto.

The film thickness of each layer in examples and comparative examples was measured by using trade name: SURFCOM 1400A manufactured by Tokyo Seimitsu Co., Ltd. unless otherwise specified.

### (Example 1)

The photosensitized solar cell module shown in Fig. 2 was produced.

A conductive glass substrate of 70 mm × 70 mm × thickness of 4 mm in which the first conductive layer 2 made of an SnO₂ film is formed on the substrate 1 made of glass (a glass substrate with an SnO₂ film manufactured by Nippon Sheet Glass Co., Ltd.) was prepared.

### <Cutting of first conductive layer>

The first conductive layer 2 was irradiated with laser light (YAG laser, fundamental wavelength: 1.06 µm, manufactured by Seishin Trading Co., Ltd.) to vaporize SnO₂ and form six lines of the scribe lines 10 each having a width of 0.1 mm at intervals of 6 mm.

### <Formation of catalyst layer>

A screen printing plate with seven lined up openings of 5 mm × 50 mm was prepared on the conductive glass substrate and a catalyst forming material (Pt-Catalyst T/SP, manufactured by Solaronix SA) was applied by using a screen printing machine (model: LS-34TVA, manufactured by NEWLONG SEIMITSU KOGYO CO., LTD.), and the obtained coating film was fired at 450°C for 1 hour to form the catalyst layer 3 in a cluster form.

### <Formation of porous insulating layer>

Fine particles of zirconium oxide (having a particle diameter of 100 nm, manufactured by C. I. Kasei Company, Limited) were dispersed in terpineol, and ethyl cellulose was further mixed therewith to prepare a paste. The weight ratio of the zirconium oxide fine particles, terpineol and ethyl cellulose was 65 : 30 : 5. A screen printing plate with seven lined up openings of 6 mm × 54 mm was prepared and the obtained paste was applied to the catalyst layer 3 by using a screen printing machine (model: LS-34TVA, manufactured by NEWLONG SEIMITSU KOGYO CO., LTD.), which paste was subjected to leveling at room temperature for 1 hour.

Subsequently, the coating film was predried at 80°C for 20 minutes and fired at 450°C for 1 hour to form the porous insulating layer (zirconium oxide film) 4. The film thickness of the porous insulating layer 4 was 5 µm.

### <Formation of second conductive layer>

A metal mask with seven lined up openings of 6.2 mm × 52 mm was prepared and a titanium film was formed on the porous insulating layer 4 at a deposition rate of 5 Å/S by using an electron-beam evaporator ei-5 (manufactured by ULVAC, Inc.), whereby the second conductive layer 5 with a film thickness of about 500 nm was formed.

### <Formation of porous semiconductor layer>

A screen printing plate with seven lined up openings of 5 mm × 50 mm was prepared and a commercial titanium oxide paste (trade name: Ti-Nanoxide D/SP, average particle diameter: 13 nm, manufactured by Solaronix SA) was applied by using a screen printing machine (model: LS-34TVA, manufactured by NEWLONG SEIMITSU KOGYO CO., LTD.), which paste was subjected to leveling at room temperature for 1 hour.

Subsequently, the coating film was predried at 80°C for 20 minutes and thereafter fired at 450°C for 1 hour, which step was repeated five times to form the porous semiconductor layer (titanium oxide film) 6 with a total film thickness of 30 µm.

### <Adsorption of photosensitizing dye>

A photosensitizing dye (trade name: Ruthenium 620-1H3TBA, manufactured by Solaronix SA) was dissolved in a mixed solvent of acetonitrile (manufactured by Aldrich Chemical Company) and tert-butyl alcohol (manufactured by Aldrich Chemical Company) at a volume ratio of 1 : 1 so as to have a concentration of 4 × 10⁻⁴ mol/L to obtain a dye adsorption solution.

The laminate obtained through the above-mentioned step was immersed in the dye adsorption solution under a temperature condition of 40°C for 20 hours to adsorb the sensitizing dye on the porous semiconductor layer 6. Thereafter, the laminate was washed with ethanol (manufactured by Aldrich Chemical Company) and dried at about 80°C for about 10 minutes.

### <Preparation of electrolyte>

Lil (manufactured by Aldrich Chemical Company) with a concentration of 0.1 mol/L and I₂ (manufactured by Tokyo Chemical Industry Co., Ltd.) with a concentration of 0.01 mol/L as redox species and further tert-butyl pyridine (TBP, manufactured by Aldrich Chemical Company) with a concentration of 0.5 mol/L and dimethylpropyl imidazole iodide (DMPII, manufactured by Shikoku Chemicals Corp.) with a concentration of 0.6 mol/L as additives were added and dissolved in acetonitrile as a solvent to prepare an electrolyte.

### <Formation of sealing member and injection of electrolyte>

An ultraviolet curing material (model: 31X-101, manufactured by Three Bond Co., Ltd.) was applied the circumference and between the solar cell forming regions on the first conductive layer 2 and the tempered glass substrate 7 of 50 mm × 70 mm × thickness of 4.0 mm separately prepared (manufactured by Asahi Glass Co., Ltd.) and the substrate 1 were stuck together. A hole for injecting an electrolyte was previously provided in the substrate 1. Subsequently, the applied portion was irradiated with ultraviolet rays by using an ultraviolet irradiation lamp (trade name: Novacure, manufactured by EFD Inc.) to form the sealing member 8 by curing the ultraviolet curing material and fix two sheets of the substrates 1 and 7.

Subsequently, an electrolyte was injected through the hole for injecting an electrolyte of the substrate 1 and a solar cell module corresponding to Fig. 2 was completed by sealing the hole for injecting an electrolyte with a resin.

The obtained solar cell module was irradiated with light with an intensity of 1 kW/m² (AM 1.5 solar simulator) to measure various kinds of solar cell characteristics. The results are shown in Table 1.

### (Example 2)

The solar cell module with the structure of Fig. 2 was produced in the same manner as in Example 1 except for performing preparation of the conductive substrate by the following step.

### <Preparation of conductive substrate>

An alumina substrate of 70 mm × 70 mm × thickness of 1 mm was prepared and a titanium film was formed on the substrate at a deposition rate of 5 Å/S by using an electron-beam evaporator ei-5 (manufactured by ULVAC, Inc.), to give the first conductive layer 2 with a film thickness of about 700 nm.

The obtained solar cell module was irradiated with light with an intensity of 1 kW/m² (AM1.5 solar simulator) to measure various kinds of solar cell characteristics. The results are shown in Table 1.

### (Examples 3 to 10)

The solar cell module with the structure of Fig. 2 was produced in the same manner as in Example 1 except for forming small pores on the second conductive layer 5 by the following step after forming the second conductive layer 5 in Example 1.

### <Formation of small pores on second conductive layer>

The second conductive layer 5 was irradiated with laser light (YAG laser, fundamental wavelength: 1.06 µm, manufactured by Seishin Trading Co., Ltd.) to form the small pores shown in Table 2 while adjusting current values and frequencies.

The obtained solar cell module was irradiated with light with an intensity of 1 kW/m² (AM 1.5 solar simulator) to measure various kinds of solar cell characteristics. The results are shown in Table 1.

### (Comparative Example 1)

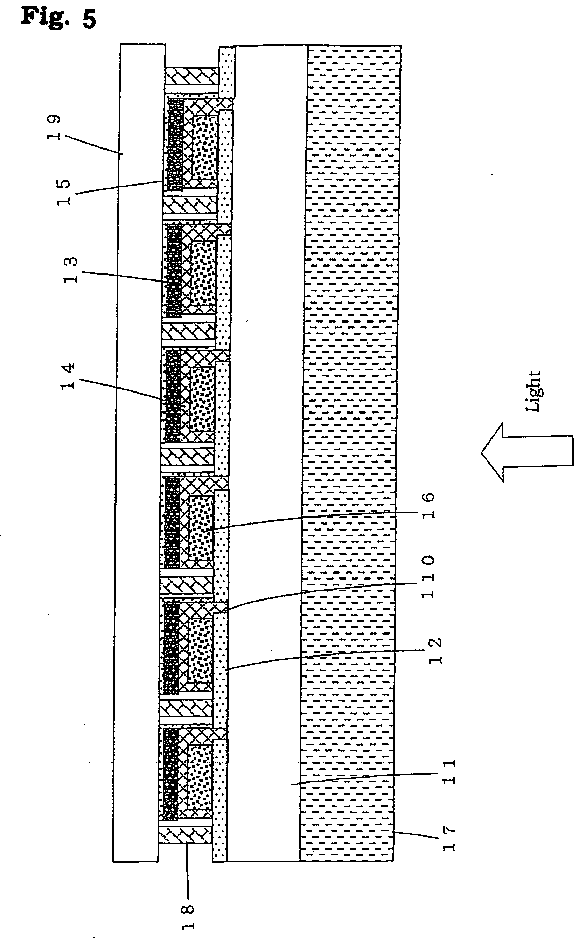

The photosensitized solar cell module shown in Fig. 5 was produced in the following manner.

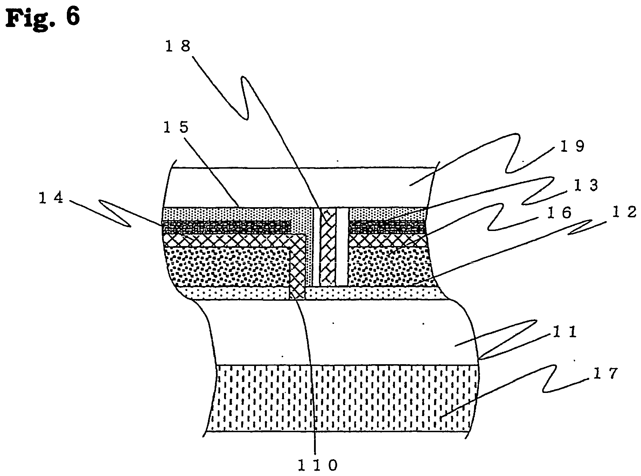

This solar cell module is one in which the solar cells with the conventional structure shown in Fig. 4 are connected in series. Fig. 6 is a schematic cross-sectional view showing a connecting portion of two solar cells in the solar cell module of Fig. 5. In Figs. 5 and 6, the same reference numerals are given for the same components as the components in Fig. 4.

A conductive glass substrate of 70 mm × 70 mm × thickness of 4 mm in which the transparent conductive layer 12 made of an SnO₂ film is formed on the substrate 11 made of glass (a glass substrate with an SnO₂ film manufactured by Nippon Sheet Glass Co., Ltd.) was prepared.

### <Cutting of transparent conductive layer>

The transparent conductive layer 12 was irradiated with laser light (YAG laser, fundamental wavelength: 1.06 µm, manufactured by Seishin Trading Co., Ltd.) to vaporize SnO₂ and form six lines of the scribe lines 110 each having a width of 0.1 mm at intervals of 6 mm.

### <Formation of porous semiconductor layer>

A screen printing plate with seven lined up openings of 5 mm × 50 mm was prepared and a commercial titanium oxide paste (trade name: Ti-Nanoxide D/SP, average particle diameter: 13 nm, manufactured by Solaronix SA) was applied by using a screen printing machine (model: LS-34TVA, manufactured by NEWLONG SEIMITSU KOGYO CO., LTD.), which paste was subjected to leveling at room temperature for 1 hour.

Subsequently, the coating film was predried at 80°C for 20 minutes and thereafter fired at 450°C for 1 hour, which step was repeated five times to form the porous semiconductor layer (titanium oxide film) 16 with a total film thickness of 30 µm.

### <Formation of porous insulating layer>

Fine particles of zirconium oxide (having a particle diameter of 100 nm, manufactured by C. I. Kasei Company, Limited) were dispersed in terpineol, and ethyl cellulose was further mixed therewith to prepare a paste. The weight ratio of the zirconium oxide fine particles, terpineol and ethyl cellulose was 65 : 30 : 5.

A screen printing plate with seven lined up openings of 6 mm × 54 mm was prepared and the obtained paste was applied to the porous semiconductor layer 16 by using a screen printing machine (model: LS-34TVA, manufactured by NEWLONG SEIMITSU KOGYO CO., LTD.), which paste was subjected to leveling at room temperature for 1 hour.

Subsequently, the coating film was predried at 80°C for 20 minutes and fired at 450°C for 1 hour to form the porous insulating layer (zirconium oxide film) 14. The film thickness of the porous insulating layer 14 was 5 µm.

### <Formation of catalyst layer>

A screen printing plate with seven lined up openings of 5 mm × 50 mm was prepared and a catalyst layer forming material (Pt-Catalyst T/ SP, manufactured by Solaronix SA) was applied on the porous insulating layer 14 by using a screen printing machine (model: LS-34TVA, manufactured by NEWLONG SEIMITSU KOGYO CO., LTD.), and the obtained coating film was fired at 450°C for 1 hour to form the catalyst layer 13 in a cluster form.

### <Formation of conductive layer>

A metal mask with seven lined up openings of 6.2 mm × 52 mm was prepared and a titanium film was formed on the catalyst layer 13 at a deposition rate of 5 Å/S by using an electron-beam evaporator ei-5 (manufactured by ULVAC, Inc.), whereby the conductive layer 15 with a film thickness of about 500 nm was formed.

### <Adsorption of photosensitizing dye>

A photosensitizing dye (trade name: Ruthenium 620-1H3TBA, manufactured by Solaronix SA) was dissolved in a mixed solvent of acetonitrile (manufactured by Aldrich Chemical Company) and tert-butyl alcohol (manufactured by Aldrich Chemical Company) at a volume ratio of 1 : 1 so as to have a concentration of 4 × 10⁻⁴ mol/L to prepare a dye adsorption solution.

The laminate obtained through the above-mentioned step was immersed in the dye adsorption solution under a temperature condition of 40°C for 20 hours to adsorb the photosensitizing dye on the porous semiconductor layer 16. Thereafter, the laminate was washed with ethanol (manufactured by Aldrich Chemical Company) and dried at about 80°C for about 10 minutes.

### <Preparation of electrolyte>

LiI (manufactured by Aldrich Chemical Company) with a concentration of 0.1 mol/L and I₂ (manufactured by Tokyo Chemical Industry Co., Ltd.) with a concentration of 0.01 mol/L as redox species and further tert-butyl pyridine (TBP, manufactured by Aldrich Chemical Company) with a concentration of 0.5 mol/L and dimethylpropyl imidazole iodide (DMPII, manufactured by Shikoku Chemicals Corp.) with a concentration of 0.6 mol/L as additives were added and dissolved in acetonitrile as a solvent to prepare an electrolyte.

### <Formation of sealing member and injection of electrolyte>

An ultraviolet curing material (model: 31X-101, manufactured by Three Bond Co., Ltd.) was applied the circumference and between the solar cell forming regions on the transparent conductive layer 12 and a cover glass 19 of 50 mm × 70 mm × thickness of 1.0 mm (model: 7059, manufactured by Corning Incorporated) and the substrate 11 were stuck together. A hole for injecting an electrolyte was previously provided in the cover glass 19. Subsequently, the applied portion was irradiated with ultraviolet rays by using an ultraviolet irradiation lamp (trade name: Novacure, manufactured by EFD Inc.) to form the sealing member 18 by curing the ultraviolet curing material and thereby fix two sheets of the glass plates.

Subsequently, an electrolyte was injected through the hole for injecting an electrolyte of the substrate 1 and a solar cell module corresponding to Fig. 8 was completed by sealing the hole for injecting an electrolyte with a resin.

The obtained solar cell module was irradiated with light with an intensity of 1 kW/m² (AM 1.5 solar simulator) to measure various kinds of solar cell characteristics. The results are shown in Table 1.

**[Table 1]**

| | Short-circuit current | Open voltage | Fill factor | Conversion efficiency |
|---|---|---|---|---|
| | Jsc (mA/cm²) | Voc (V) | FF | (%) |
| Example 1 | 1.98 | 4.92 | 0.67 | 6.52 |
| Example 2 | 1.97 | 4.98 | 0.68 | 6.67 |
| Example 3 | 2.09 | 4.97 | 0.67 | 6.96 |
| Example 4 | 2.12 | 4.98 | 0.68 | 7.17 |
| Example 5 | 2.10 | 4.91 | 0.69 | 7.11 |
| Example 6 | 1.98 | 4.90 | 0.66 | 6.40 |
| Example 7 | 1.97 | 4.96 | 0.65 | 6.35 |
| Example 8 | 2.07 | 4.97 | 0.67 | 6.89 |
| Example 9 | 2.10 | 4.91 | 0.68 | 7.01 |
| Example 10 | 1.98 | 4.90 | 0.64 | 6.21 |
| Comparative Example 1 | 1.67 | 3.98 | 0.59 | 3.92 |

**[Table 2]**

| | Small pore diameter | Interval |
|---|---|---|
| | (µm) | (µm) |
| Example 3 | 40 | 0.5 |
| Example 4 | 40 | 1 |
| Example 5 | 40 | 50 |
| Example 6 | 40 | 100 |
| Example 7 | 0.5 | 30 |
| Example 8 | 1 | 30 |
| Example 9 | 50 | 30 |
| Example 10 | 100 | 30 |

In Examples 1 to 10, only the tempered glass 7 is placed on the light-receiving surface side of the porous semiconductor layer 6, so that the short-circuit current is high; on the contrary, in Comparative Example 1, the substrate 11 with the SnO₂ film (FTO glass) as well as the tempered glass 17 exist on the light-receiving surface side of the porous semiconductor layer 16, so that the light that reaches the porous semiconductor layer 16 as the electric generating element is decreased and thereby the short-circuit current is decreased. Also, in Comparative Example 1, the catalyst layer material attaches to the porous semiconductor layer 16, so that it is conceived that the open voltage is greatly decreased as compared with the examples.

### (Example 12)

The photosensitized solar cell module shown in Fig. 2 was produced in the same manner as in Example 1 except that there were some differences in the photosensitizer and the electrolyte in the following manner.

### <Production of photosensitizer>

A trioctyl phosphine solution of CdS (quantum dot) as the photosensitizer was produced by the method described in J. Am. Chem. Soc. 1993, 115, 8706.

The results of measuring the lowest occupied molecular orbital (HOMO) and the highest unoccupied molecular orbital (LUMO) of CdS by AC-3 (manufactured by Riken Keiki Co., Ltd.) and absorbance measurement equipment (UV-2000, manufactured by Shimadzu Corporation) are shown in Table 3.

In addition, the photosensitization elements of the inorganic materials usable in the example are shown in Table 3.

**[Table 3]**

| | HOMO (V) | LUMO (V) |
|---|---|---|
| Cadmium sulfide (CdS) | -6.4 | -3.1 |
| Cadmium selenide (CdSe) | -6.0 | -3.4 |
| Lead sulfide (PbS) | -5.5 | -4.1 |
| Indium arsenide (InAs) | -5.5 | -4.1 |
| Cadmium telluride (CdTe) | -5.3 | -2.8 |

### <Support of CdS on porous semiconductor layer>

The laminate was immersed in a CdS solution under a temperature condition of 40°C for 12 hours to adsorb CdS on the porous semiconductor layer 6. Thereafter, the laminate was washed with ethanol (manufactured by Aldrich Chemical Company) and dried to obtain a porous semiconductor layer with CdS adsorbed thereon.

### <Preparation of electrolyte>

Na₂S (manufactured by Aldrich Chemical Company) with a concentration of 2 mol/L and sulfur (manufactured by Aldrich Chemical Company) with a concentration of 3 mol/L were dissolved in pure water to prepare an electrolyte.

The obtained solar cell module of Example 12 was irradiated with light with an intensity of 1 kW/m² (AM1.5 solar simulator) to measure various kinds of solar cell characteristics. The results are shown in Table 4.

### (Example 13)

The solar cell module with the structure of Fig. 2 was produced in the same manner as in Example 12 except for performing preparation of the conductive substrate by the following step.

### <Preparation of conductive substrate>

An alumina substrate of 70 mm × 70 mm × thickness of 1 mm was prepared and a titanium film was formed on the substrate at a deposition rate of 5 Å/S by using an electron-beam evaporator ei-5 (manufactured by ULVAC, Inc.), to give the first conductive layer 2 with a film thickness of about 700 nm.

The obtained solar cell module was irradiated with light with an intensity of 1 kW/m² (AM 1.5 solar simulator) to measure various kinds of solar cell characteristics. The results are shown in Table 4.

The obtained solar cell module was irradiated with light with an intensity of 1 kW/m² (AM 1.5 solar simulator) to measure various kinds of solar cell characteristics. The results are shown in Table 4.

**[Table 4]**

| | Short-circuit current | Open voltage Voc (V) | Fill factor | Conversion efficiency |
|---|---|---|---|---|
| | Jsc (mA/cm²) | | FF | (%) |
| Example 12 | 0.25 | 4.02 | 0.54 | 0.54 |
| Example 13 | 0.26 | 4.31 | 0.54 | 0.61 |

## Claims

1. A photosensitized solar cell module including a plurality of photosensitized solar cells each comprising
a conductive substrate (A) including a first conductive layer (2), a scribe line (10) and an extraction electrode (2a), wherein the scribe line (10) is interposing the first conductive layer (2) and the extraction electrode (2a), the conductive substrate (A) being positioned on an opposed side to a light-receiving side,
a catalyst layer (3), a porous insulating layer (4) internally containing an electrolyte, a second conductive layer (5) for allowing movement of the electrolyte, a porous semiconductor layer (6) with a photosensitizer adsorbed thereon, internally containing the electrolyte, and a translucent cover member (7) positioned on the light-receiving side and laminated directly in this order on the first conductive layer (2), and
a sealing member (8) as an intercell insulating layer, the sealing member (8) is directly contacted with the first conductive layer (2) and the translucent cover member (7),
wherein the second conductive layer (5) of one photosensitized solar cell is electrically and directly connected to the first conductive layer (2) of the adjacent other photosensitized solar cell, wherein the second conductive layer (5) reaches on one side of the cell down to the extraction electrode (2a) of the neighboring cell and the scribe line (10) is filled with the porous insulating layer (4) reaching down to the substrate (1) on the same side the second conductive layer (5) is reaching down to the first conductive layer (2) thereby achieving an electric connection of the plurality of photosensitized solar cells in series.

2. The photosensitized solar cell module according to claim 1, wherein the conductive layer has a plurality of small pores for circulating the electrolyte between the porous insulating layer (4) and the porous semiconductor layer (6).

3. The photosensitized solar cell module according to claim 1, wherein the photosensitizer contains at least one of an organic dye and a metal complex dye.

4. The photosensitized solar cell module according to claim 1, wherein the photosensitizer contains at least one of Cd, Pb, Sb, In, Ga, S, Se and As.

5. The photosensitized solar cell module according to claim 1, wherein the first conductive layer (2) is made from a metallic material or a metallic oxide material.

6. The photosensitized solar cell module according to claim 5, wherein the metallic material comprises at least one of titanium, nickel and tantalum.

7. The photosensitized solar cell module according to claim 5, wherein the metallic oxide material comprises at least one of tin oxide, fluorine-doped tin oxide, zinc oxide and indium oxide.

8. The photosensitized solar cell module according to claim 1, wherein the translucent cover member (7) is tempered glass.

9. The photosensitized solar cell module according to claim 1, wherein the conductive substrate (A) has an insulative substrate and a metal layer formed on the insulative substrate and contacts the catalyst layer (3).

10. A method for producing a photosensitized solar cell module **characterized by** comprising:
step (1) of preparing a conductive substrate (A) including a first conductive layer (2), a scribe line (10) and an extraction electrode (2a), wherein the scribe line (10) is interposing the first conductive layer (2) and extraction electrode (2a), and laminating directly a catalyst layer (3), a porous insulating layer (4), a second conductive layer (5) for allowing movement of the electrolyte and a porous semiconductor layer (6) with a photosensitizer adsorbed thereon in this order on the first conductive layer (2) of the conductive substrate (A), respectively to form a plurality of laminated structures having a solar cell formation region on the first conductive layers (2);
step (2) of covering a surface of the porous semiconductor layer (6) of each of the laminated structures with a translucent cover member (7) positioned on the light receiving side and sealing an outer circumference between the conductive substrate (A) and the translucent cover member (7), and a space between two adjacent solar cell formation regions with a sealing member (8); and
step (3) of injecting an electrolyte into an inside region between the conductive substrate (A) and the translucent cover member (7) to impregnate the electrolyte into the porous semiconductor layer (6) and the porous insulating layer (4),
wherein in the step (1) an end of the porous insulating layer (4) of one solar cell formation region is positioned between the first conductive layer (2) of one solar cell formation region and that of the adjacent other solar cell formation region, and an end of the second conductive layer (5) of said one solar cell formation region is directly contacted with the first conductive layer (2) of the adjacent other solar cell formation region to be electrically connected in series, wherein the second conductive layer (5) reaches on one side of the cell down to the extraction electrode (2a) of the neighboring cell and the scribe line (10) is filled with the porous insulating layer (4) reaching down to the substrate (1) on the same side the second conductive layer (5) is reaching down to the first conductive layer (2).

## Patentansprüche

1. Photosensibilisiertes Solarzellenmodul, enthaltend eine Vielzahl photosensibilisierter Solarzellen, jeweils umfassend
ein leitfähiges Substrat (A), das eine erste leitfähige Schicht (2), eine Ritzlinie (10) und eine Extraktionselektrode (2a) umfasst, wobei die Ritzlinie (10) zwischen der ersten leitfähigen Schicht (2) und der Extraktionselektrode (2a) angeordnet ist, wobei das leitfähige Substrat (A) auf einer gegenüberliegenden Seite zu einer lichtempfangenden Seite positioniert ist,
eine Katalysatorschicht (3), eine poröse isolierende Schicht (4), die intern ein Elektrolyt enthält, eine zweite leitfähige Schicht (5), um eine Bewegung des Elektrolyten zu ermöglichen, eine poröse Halbleiterschicht (6) mit einem darauf adsorbierten Photosensibilisator, intern den Elektrolyt enthaltend, und ein durchsichtiges Deckelement (7), das auf der lichtempfangenden Seite positioniert ist, und in dieser Reihenfolge direkt auf der ersten leitfähigen Schicht (2) geschichtet, und
ein Dichtelement (8) als eine interzelluläre isolierende Schicht, wobei das Dichtelement (8) mit der ersten leitfähigen Schicht (2) und dem durchsichtigen Deckelement (7) direkt kontaktiert ist,
wobei die zweite leitfähige Schicht (5) einer photosensibilisierten Solarzelle mit der ersten leitfähigen Schicht (2) der benachbarten anderen photosensibilisierten Solarzelle elektrisch und direkt verbunden ist, wobei die zweite leitfähige Schicht (5) auf einer Seite der Zelle zur Extraktionselektrode (2a) der benachbarten Zelle hinab reicht und die Ritzlinie (10) mit der porösen isolierenden Schicht (4) gefüllt ist, die zum Substrat (1) auf der gleichen Seite hinab reicht, auf der die zweite leitfähige Schicht (5) zur ersten leitfähigen Schicht (2) hinab reicht, wodurch eine elektrische Verbindung der Vielzahl photosensibilisierter Solarzellen in Reihe erreicht wird.

2. Photosensibilisiertes Solarzellenmodul nach Anspruch 1, wobei die leitfähige Schicht eine Vielzahl kleiner Poren aufweist, um den Elektrolyten zwischen der porösen isolierenden Schicht (4) und der porösen Halbleiterschicht (6) zirkulieren zu lassen.

3. Photosensibilisiertes Solarzellenmodul nach Anspruch 1, wobei der Photosensibilisator zumindest einen eines organischen Farbstoffs und eines Metallkomplex-Farbstoffs enthält.

4. Photosensibilisiertes Solarzellenmodul nach Anspruch 1, wobei der Photosensibilisator zumindest eines von Cd, Pb, Sb, In, Ga, S, Se und As enthält.

5. Photosensibilisiertes Solarzellenmodul nach Anspruch 1, wobei die erste leitfähige Schicht (2) aus einem metallischen Material oder einem metallischen Oxidmaterial geschaffen ist.

6. Photosensibilisiertes Solarzellenmodul nach Anspruch 5, wobei das metallische Material zumindest eines von Titan, Nickel und Tantal umfasst.

7. Photosensibilisiertes Solarzellenmodul nach Anspruch 5, wobei das metallische Oxidmaterial zumindest eines von Zinnoxid, fluordotiertem Zinnoxid, Zinkoxid und Indiumoxid umfasst.

8. Photosensibilisiertes Solarzellenmodul nach Anspruch 1, wobei das durchsichtige Deckelement (7) gehärtetes Glas ist.

9. Photosensibilisiertes Solarzellenmodul nach Anspruch 1, wobei das leitfähige Substrat (A) ein isolierendes Substrat und eine auf dem isolierenden Substrat ausgebildete Metallschicht aufweist und die Katalysatorschicht (3) kontaktiert.

10. Verfahren zum Herstellen eines photosensibilisierten Solarzellenmoduls, **dadurch gekennzeichnet, dass** es umfasst:
Schritt (1) zum Präparieren eines leitfähigen Substrats (A), das eine erste leitfähige Schicht (2), eine Ritzlinie (10) und eine Extraktionselektrode (2a) umfasst, wobei die Ritzlinie (10) zwischen der ersten leitfähigen Schicht (2) und der Extraktionselektrode (2a) angeordnet ist, und direkten Schichten einer Katalysatorschicht (3), einer porösen isolierenden Schicht (4), einer zweiten leitfähigen Schicht (5), um eine Bewegung des Elektrolyten zu ermöglichen, und einer porösen Halbleiterschicht (6) mit einem darauf adsorbierten Photosensibilisator, in dieser Reihenfolge, auf der ersten leitfähigen Schicht (2) des leitfähigen Substrats (A), um jeweils eine Vielzahl geschichteter Strukturen mit einem Gebiet zur Ausbildung von Solarzellen auf den ersten leitfähigen Schichten (2) zu bilden;
Schritt (2) zum Bedecken einer Oberfläche der porösen Halbleiterschicht (6) von jeder der geschichteten Strukturen mit einem durchsichtigen Deckelement (7), das auf der lichtempfangenden Seite positioniert wird, und Abdichten eines äußeren Umfangs zwischen dem leitfähigen Substrat (A) und dem durchsichtigen Deckelement (7) und eines Raums zwischen zwei benachbarten Gebieten zur Ausbildung von Solarzellen mit einem Dichtelement (8); und
Schritt (3) zum Injizieren eines Elektrolyten in ein inneres Gebiet zwischen dem leitfähigen Substrat (A) und dem durchsichtigen Deckelement (7), um den Elektrolyt in die porösen Halbleiterschicht (6) und die poröse isolierende Schicht (4) zu imprägnieren bzw. einzubringen,
wobei in dem Schritt (1) ein Ende der porösen isolierenden Schicht (4) eines Gebiets zur Ausbildung von Solarzellen zwischen der ersten leitfähigen Schicht (2) eines Gebiets zur Ausbildung von Solarzellen und derjenigen des benachbarten anderen Gebiets zur Ausbildung von Solarzellen positioniert wird und ein Ende der zweiten leitfähigen Schicht (5) des einen Gebiets zur Ausbildung von Solarzellen mit der ersten leitfähigen Schicht (2) des benachbarten anderen Gebiets zur Ausbildung von Solarzellen direkt kontaktiert wird, um elektrisch in Reihe verbunden zu werden, wobei die zweite leitfähige Schicht (5) auf einer Seite der Zelle zur Extraktionselektrode (2a) der benachbarten Zelle hinab reicht und die Ritzlinie (10) mit der porösen isolierenden Schicht (4) gefüllt ist, die zum Substrat (1) auf der gleichen Seite hinab reicht, auf der die zweite leitfähige Schicht (5) bis ersten leitfähigen Schicht (2) hinab reicht.

## Revendications

1. Module de cellules solaires photosensibilisées contenant une pluralité de cellules solaires photosensibilisées comprenant chacune
un substrat conducteur (A) comprenant une première couche conductrice (2), un chemin de découpe (10) et une électrode d'extraction (2a), le chemin de découpe (10) étant interposé entre la première couche conductrice (2) et l'électrode d'extraction (2a), lequel substrat conducteur (A) est positionné sur un côté opposé à un côté recevant la lumière,
une couche de catalyseur (3), une couche isolante poreuse (4) contenant en interne un électrolyte, une deuxième couche conductrice (5) pour permettre le mouvement de l'électrolyte, une couche semi-conductrice poreuse (6) avec un photosensibilisant adsorbé sur celle-ci, contenant en interne l'électrolyte, et un élément de couverture translucide (7) positionné sur le côté recevant la lumière et stratifié directement dans cet ordre sur la première couche conductrice (2), et
un élément d'étanchéité (8) servant de couche isolante inter-cellules, lequel élément d'étanchéité (8) est directement en contact avec la première couche conductrice (2) et l'élément de couverture translucide (7),
dans lequel la deuxième couche conductrice (5) d'une cellule solaire photosensibilisée est électriquement et directement connectée à la première couche conductrice (2) de l'autre cellule solaire photosensibilisée adjacente, et dans lequel la deuxième couche conductrice (5) descend sur un côté de la cellule jusqu'à l'électrode d'extraction (2a) de la cellule voisine et le chemin de découpe (10) est rempli de la couche isolante poreuse (4) descendant jusqu'au substrat (1) sur le même côté que celui où la deuxième couche conductrice (5) descend jusqu'à la première couche conductrice (2), en réalisant ainsi une connexion électrique de la pluralité de cellules solaires sensibilisées en série.

2. Module de cellules solaires sensibilisées selon la revendication 1, dans lequel la couche conductrice comporte une pluralité de petits pores pour que l'électrolyte circule entre la couche isolante poreuse (4) et la couche semi-conductrice poreuse (6).

3. Module de cellules solaires sensibilisées selon la revendication 1, dans lequel le photosensibilisant contient au moins l'un parmi un colorant organique et un colorant complexe métallique.

4. Module de cellules solaires sensibilisées selon la revendication 1, dans lequel le photosensibilisant contient au moins l'un parmi Cd, Pb, Sb, In, Ga, S, Se et As.

5. Module de cellules solaires sensibilisées selon la revendication 1, dans lequel la première couche conductrice (2) est faite en un matériau métallique ou un matériau oxyde métallique.

6. Module de cellules solaires sensibilisées selon la revendication 5, dans lequel le matériau métallique comprend au moins l'un parmi le titane, le nickel et le tantale.

7. Module de cellules solaires sensibilisées selon la revendication 5, dans lequel le matériau oxyde métallique comprend au moins l'un parmi l'oxyde d'étain, l'oxyde d'étain dopé au fluor, l'oxyde de zinc et l'oxyde d'indium.

8. Module de cellules solaires sensibilisées selon la revendication 1, dans lequel l'élément de couverture translucide (7) est du verre trempé.

9. Module de cellules solaires sensibilisées selon la revendication 1, dans lequel le substrat conducteur (A) comporte un substrat isolant et une couche métallique formée sur le substrat isolant et vient au contact de la couche de catalyseur (3).

10. Procédé pour produire un module de cellules solaires photosensibilisées, **caractérisé en ce qu'**il comprend :
une étape (1) consistant à préparer un substrat conducteur (A) comprenant une première couche conductrice (2), un chemin de découpe (10) et une électrode d'extraction (2a), le chemin de découpe (10) étant interposé entre la première couche conductrice (2) et l'électrode d'extraction (2a), et à stratifier directement une couche de catalyseur (3), une couche isolante poreuse (4), une deuxième couche conductrice (5) pour permettre le mouvement de l'électrolyte et une couche semi-conductrice poreuse (6) avec un photosensibilisant adsorbé sur celle-ci, dans cet ordre, sur la première couche conductrice (2) du substrat conducteur (A), respectivement pour former une pluralité de structures stratifiées présentant une région de formation de cellule solaire sur les premières couches conductrices (2) ;
une étape (2) consistant à recouvrir une surface de la couche semi-conductrice poreuse (6) de chacune des structures stratifiées avec un élément de revêtement translucide (7) positionné sur le côté recevant la lumière et à sceller une circonférence extérieure entre le substrat conducteur (A) et l'élément de revêtement translucide (7), et un espace entre deux régions de formation de cellule solaire adjacentes avec un élément d'étanchéité (8) ; et
une étape (3) consistant à injecter un électrolyte dans une région intérieure entre le substrat conducteur (A) et l'élément de revêtement translucide (7) pour imprégner l'électrolyte dans la couche semi-conductrice poreuse (6) et la couche isolante poreuse (4),
dans lequel, dans l'étape (1), une extrémité de la couche isolante poreuse (4) d'une région de formation de cellule solaire est positionnée entre la première couche conductrice (2) d'une région de formation de cellule solaire et celle de la région de formation de cellule solaire adjacente, et une extrémité de la deuxième couche conductrice (5) de ladite région de formation de cellule solaire est directement en contact avec la première couche conductrice (2) de l'autre région de formation de cellule solaire adjacente de sorte qu'elles sont électriquement connectées en série, et dans lequel la deuxième couche conductrice (5) descend sur un côté de la cellule jusqu'à l'électrode d'extraction (2a) de la cellule voisine et le chemin de découpe (10) est rempli de la couche isolante poreuse (4) descendant jusqu'au substrat (1) sur le même côté que celui où la deuxième couche conductrice (5) descend jusqu'à la première couche conductrice (2).
